(19) Europäisches Patentamt

European Patent Office

Office européen des brevets

(11) Publication number : **0 568 535 B1**

(12) # EUROPEAN PATENT SPECIFICATION

(45) Date of publication of patent specification :
**18.01.95 Bulletin 95/03**

(51) Int. Cl.⁶ : **H02J 7/14, B60L 11/12**

(21) Application number : **91920506.2**

(22) Date of filing : **26.11.91**

(86) International application number :
**PCT/EP91/02233**

(87) International publication number :
**WO 92/13380 06.08.92 Gazette 92/21**

(54) **PROCESS FOR CONTROLLING A GENERATOR.**

(30) Priority : **25.01.91 DE 4102150**

(43) Date of publication of application :
**10.11.93 Bulletin 93/45**

(45) Publication of the grant of the patent :
**18.01.95 Bulletin 95/03**

(84) Designated Contracting States :
**CH DE DK FR GB IT LI**

(56) References cited :
**FR-A- 2 495 384**
**PATENT ABSTRACTS OF JAPAN, vol. 10, no 381 (M-547)(2438), 19 December 1986 ; & JP-A-61 171 839**

(56) References cited :
**PATENT ABSTRACTS OF JAPAN, vol. 7, no 163 (M-229)(1308), 16 July 1983 ; & JP-A-58 069 403**
**PATENT ABSTRACTS OF JAPAN, vol.10, no 164 (E-410)(2220), 11 June 1986 ; & JP-A-61 015 598**

(73) Proprietor : **AUDI AG**
**Postfach 10 02 20**
**D-85002 Ingolstadt (DE)**

(72) Inventor : **BARSKE, Heiko**
**Asamstrasse 1**
**D-8032 Gräfelfing (DE)**

(74) Representative : **Le Vrang, Klaus**
**AUDI AG,**
**Patentabteilung**
**D-85045 Ingolstadt (DE)**

EP 0 568 535 B1

## Description

The invention relates to a process for controlling a generator associated with an internal combustion engine, according to the preamble of claim 1.

Modern motor vehicles driven by an internal combustion engine have, associated with them, a generator which is used to supply power for the current-consuming equipment. At the same time, a battery is provided to make a sufficiently large power supply available at peak demand. Said battery has to be recharged again, especially after start-up processes. The energy required for recharging increases the fuel consumption of the motor vehicle.

From the Japanese patent abstract volume 10, no. 381 (M-547) (2438) and JP-A-61-171839 there is known a process for controlling the generator associated with an internal combustion engine, wherein the generator for generating the electric power is only operated under specific operating conditions of the internal combustion engine. This condition is related to conditions, when a "partial-lean control" cannot be effected.

From the FR-A 2 495 384 there is known a process for controlling a generator belonging to an internal combustion engine, the generator only being activated during the diesel operation of the engine in combination with additional conditions, e.g. vehicle velocity, rotational speed, or charge on the generator.

The aim of the invention is to reduce the fuel consumption required to generate power in the motor vehicle. Said aim is achieved by the main claim.

According to the invention, it is provided that the generator does not generate power continuously but is connected or disconnected in dependence upon the operating point of the internal combustion engine in the engine consumption characteristic map.

The engine consumption characteristic map comprises lines having constant specific consumption values, usually indicated in g/kWh, which are plotted in a plane against the engine speed and torque. An example of such an engine consumption characteristic map is indicated in Bosch's Automotive Engineering Handbook, 1984, 19th edition, page 269.

The invention is based on the finding, outlined in greater detail below, that it is possible to optimise the energy, which is made available for power generation by burning fuel, by selecting specific operating points in the engine consumption characteristic map. As is stated in sub-claim 2, the most favourable points in the engine consumption characteristic map are those at which the internal combustion engine is operating at low efficiency. In such cases, the increased power requirement called for by power generation means a lower excess fuel consumption than in those regions in which the internal combustion engine is operating at high efficiency. It is surprising that it is precisely at points where the efficiency of the internal combustion engine is low that the additional energy required may be obtained more cost-effectively than in the regions in which the internal combustion engine is operating at high efficiency.

In practice, the engine consumption characteristic map is stored in a memory, generally in a ROM in the engine control unit. From the speed, transmission ratio, and load data which are already available, it is possible to determine at which characteristic map point the internal combustion engine is being operated at any one time and, in dependence upon said point, a decision may be taken as to whether the generator should be connected or disconnected.

It is of course possible to provide a time factor so that the operating state leading to connection or disconnection has to be present for a longer period of time before the switching command is relayed. By said means it is possible to avoid constant connection and disconnection of the generator, with a logic detecting in which operating state the engine is being predominantly driven at any one time. A hysteresis characteristic for connection and disconnection of the generator is also expedient to avoid over-frequent switching back and forth.

In a preferred embodiment, it is provided that the charge level of the battery is simultaneously monitored. This is to prevent the generator from being connected only in the desired regions if the battery has been discharged to an excessive degree. In such a case, the central absolute requirement is for the battery to be recharged.

The process just described is particularly suitable for use in a hybrid vehicle which is driven under certain operating conditions, e.g. in urban traffic, by an electric motor and under other operating conditions, e.g. in interurban traffic, and at higher speeds by an internal combustion engine. In such hybrid vehicles which are prior art, it is provided that a generator, which is usually independent of the generator which supplies power to the current-consuming equipment required during i.c. engine operation, charges the batteries which are utilised for electric motor operation. This generally requires considerable quantities of electric charge to be made available so that, in this field especially, purposeful selection of the operating states in which the electric charge is to be generated by the internal combustion engine may lead to quite substantial savings in fuel.

The principle of the invention is described hereinafter with reference to the drawings. The drawings show:

Fig.1    an engine consumption characteristic map illustrating the principle of the invention; and

Fig.2 a block diagram.

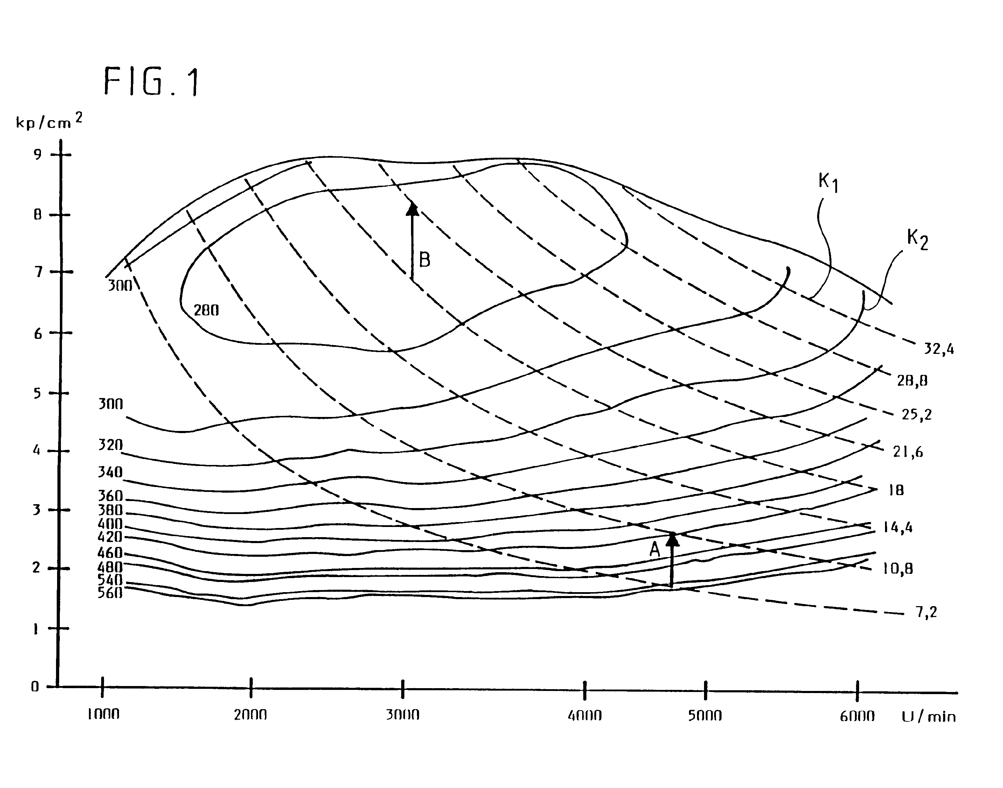

Fig.1 shows an engine consumption characteristic map of the type plotted, for example, for a 36 kW engine. The speed of the internal combustion engine is plotted on the X axis and the operating pressure upon the piston, by means of which the engine torque is determined, is plotted in $kp/cm^2$ on the Y axis.

The family of curves $K_2$ represents lines of identical specific consumption, the numbers indicated are g/kWh and therefore indicate how much fuel is consumed to generate 1 kWh.

The family of curves $K_1$ are curves of identical output, the numbers indicated are kW. To simplify the graph, the road resistance lines in the various transmission ratios have been omitted since they are not necessary to an explanation of the invention.

The case is now considered where connection of the generator increases the power demand of the internal combustion engine by 3.6 kW. This is expressed by the arrows A and B. The bottom end of said arrows lies in a region in which only the internal combustion engine is being operated. The point of the arrow lies on the point reached in the engine consumption characteristic map when the generator has been connected and the power demand has increased accordingly.

Arrow A shows a region in which the internal combustion engine is being operated at relatively low efficiency, arrow B lies in a region in which the internal combustion engine is being operated at high efficiency.

The consumption of the internal combustion engine at the bottom end of the arrow A is

$$540 \text{ g/kWh} \cdot 7.2 \text{ kW} = 3888 \text{ g/h.}$$

At the working point shown by the point of the arrow A the consumption of the internal combustion engine is

$$420 \text{ g/kWh} \cdot 10.8 \text{ kW} = 4536 \text{ g/h.}$$

Connection of the generator has therefore led to an increase in the fuel consumption of 648 g/h, corresponding at said operating point to an excess consumption of 180 g/h per 1 kW of required output.

The same calculation for operating points illustrated by arrow B results in the following situation: when the internal combustion is operating at high efficiency and consuming only 280 g/kWh, in the event of a power demand of 18 kW with the generator not connected, the following consumption is determined at the operating point corresponding to the bottom end of the arrow B:

$$280 \text{ g/kWh} \cdot 18 \text{ kW} = 5040 \text{ g/h.}$$

Connection of the generator leads to the power demand being increased by 3.6 kW, so that the operating point illustrated by the point of the arrow B is then reached. At said operating point

$$280 \text{ g/kWh} \cdot 21.6 \text{ kW} = 6048 \text{ g/h}$$

is reached. The excess consumption for the power demand of the generator this time is 1008 g/h, i.e. 280 g/h per 1 kW motor output. In other words, the fuel required to generate the electric power is 50% higher at operating point B than at operating point A.

The essential point of the invention is therefore to disconnect the generator in regions where it is relatively unfavourable to generate electrical power, i.e. in those regions where the internal combustion engine itself is being operated at high efficiency, and to operate the generator only in those regions where the internal combustion engine is being operated at low efficiency, for it is there that the additional electrical power may be obtained at a relatively low cost in terms of fuel.

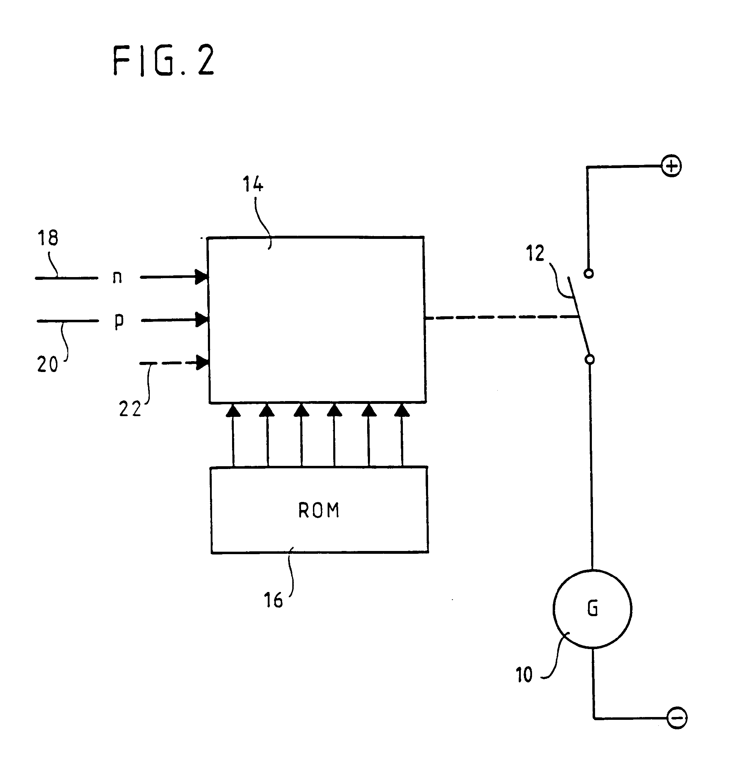

Fig.2 shows a block diagram for effecting the process according to the invention.

A generator 10 may be activated or deactivated by a switch 12 so that it is loaded when the switch 12 is closed or operates at no load when the switch 12 is open. Alternatively, instead of electrical loading for activation and deactivation the mechanical drive may be actively or non-actively operated.

Activation of the switch 12 is effected by means of a logic module 14. By way of a series of inputs, represented for example by the reference numerals 18, 20, 22, the logic module 14 receives information about operating parameters of the internal combustion engine, for instance a value representative of the engine speed by way of input 18, the value of the partial vacuum in the intake manifold which varies with the load by way of the input 20, and information about the gear speed transformation, for example, by way of the input 22.

In accordance with said values, a characteristic map value, which is stored in the ROM 16 connected to the logic module 14 and contains information about the additional power consumption resulting from activation of the generator, is selected. In dependence upon said value, a decision is taken in the logic module 14 as to whether the switch 12 for operating the generator 10 should be closed or not.

## Claims

1. Process for controlling a generator (10) associated with an internal combustion engine, said generator (10) for generating electric power being only operated under specific operating conditions of the internal combustion engine in the engine consumption characteristic map
characterised in that
said engine consumption characteristic map is stored in a memory (16),
the information about operating parameters of the internal combustion engine is input to determine the operating point in the characteristic map and the value of additional power consumption resulting from activition of the generator (10), and
the generator (10) is connected for electric power generation or disconnected in dependence upon this value.

2. Process according to claim 1, characterised in that the generator is operated under operating conditions of internal combustion engine of relatively low efficiency.

3. Process according to claim 1 and 2, characterised in that a characteristic map point in the engine consumption characteristic map is set from the speed, the transmission ratio and load data.

4. Process according to claim 3, characterised in that the charge level of the battery is monitored and, below a threshold value for the charge level, the generator is connected for power generation independently of the operating state of the internal combustion engine.

5. Process according to one of claim 1 to 4 for use in a hybrid vehicle having two generators, of which the first is used to generate the power requirement during i.c. engine operation and the second replaces the electric charge, which is removed from the batteries during electric operation, during i.c. engine operation, characterised in that the first generator is continuously in operation during i.c. engine operation and the second generator is connected and disconnected in dependence upon the efficiency of the i. c. engine.

## Patentansprüche

1. Verfahren zur Steuerung eines Generators (10), der einer Brennkraftmaschine zugeordnet ist, wobei der Generator (10) zur Erzeugung elektrischer Energie lediglich unter bestimmten Betriebsbedingungen der Brennkraftmaschine im Motorverbrauchs-Kennfeld betrieben wird, dadurch gekennzeichnet, daß
das Motorverbrauchs-Kennfeld in einem Speicher (16) gespeichert ist,
die Information über die Betriebsparameter der Brennkraftmaschine eingegeben wird, um den Betriebspunkt im Kennfeld zu bestimmen und den Wert des zusätzlichen Energieverbauchs, der durch die Aktivierung des Generators (10) erfolgt, und
der Generator (10) zur Erzeugung elektrischer Energie abhängig von diesem Wert angesteuert wird.

2. Verfahren nach Anspruch 1, dadurch gekennzeichnet, daß der Generator betrieben wird in Betriebszuständen mit vergleichsweise schlechtem Wirkungskreis der Brennkraftmaschine.

3. Verfahren nach Anspruch 1 oder 2, dadurch gekennzeichnet, daß ein charakteristischer Kennfeldpunkt im Motorverbrauchs-Kennfeld bestimmt wurde durch die Drehzahl, das Übersetzungsverhältnis und die Last.

4. Verfahren nach Anspruch 3, dadurch gekennzeichnet, daß der Batterieladezustand überwacht wird und unterhalb eines Schwellwertes für den Ladezustand der Generator unabhängig von dem Betriebszustand der Brennkraftmaschine zur Stromerzeugung eingeschaltet wird.

5. Verfahren nach einem der Ansprüche 1 bis 4 zur Verwendung in einem Hybridfahrzeug mit zwei Generatoren, deren erster zur Erzeugung des Strombedarfs bei Betrieb mit Brennkraftmaschine verwendet wird und deren zweiter die im Elektrobetrieb den Akkumulatoren entnommene elektrische Ladung wieder während des Betriebes mit Brennkraftmaschine ersetzt, dadurch gekennzeichnet, daß der erste Generator bei Betrieb über Brennkraftmaschine ständig in Betrieb ist und der zweite Generator abhängig vom Wirkungsgrad der Brennkraftmaschine ein- bzw. abgeschaltet wird.

## Revendications

1. Procédé de commande d'un alternateur (10) associé à un moteur à combustion interne, ledit alternateur (10) n'étant mis en service, pour la production de courant électrique, que dans des conditions spécifiques de fonctionnement du moteur à combustion interne sur le diagramme caractéristique de consommation du moteur,

caractérisé en ce que

ledit diagramme caractéristique de consommation du moteur est enregistré dans une mémoire (16),

les informations concernant des paramètres de fonctionnement du moteur à combustion interne sont introduites pour déterminer le point de fonctionnement sur le diagramme caractéristique et la valeur de consommation supplémentaire de puissance qui résulte de la mise en service de l'alternateur (10),

l'alternateur (10) est connecté en vue de la production de courant électrique ou est déconnecté en fonction de cette valeur.

2. Procédé selon la revendication 1, caractérisé en ce que l'alternateur est mis en service dans des conditions de fonctionnement d'un moteur à combustion interne à rendement relativement bas.

3. Procédé selon la revendication 1 ou 2, caractérisé en ce qu'un point de fonctionnement sur le diagramme caractéristique de consommation du moteur est établi d'après la vitesse, le rapport de transmission et les données de charge.

4. Procédé selon la revendication 3, caractérisé en ce que le niveau de charge de la batterie est surveillé et, au-dessous d'une valeur de seuil pour le niveau de charge, l'alternateur est connecté en vue de la production de courant, quel que soit le régime de fonctionnement du moteur à combustion interne.

5. Procédé selon l'une quelconque des revendications 1 à 4, applicable dans un véhicule hybride équipé de deux alternateurs, dont le premier sert à produire le courant nécessaire pendant le fonctionnement du moteur à combustion interne et le second rétablit, pendant le fonctionnement du moteur à combustion interne, la charge électrique qui a été prise sur les batteries pendant le fonctionnement électrique, caractérisé en ce que le premier alternateur est constamment en service pendant le fonctionnement du moteur à combustion interne et le second alternateur est connecté et déconnecté en fonction du rendement du moteur à combustion interne.

FIG.1

# FIG.2